Europäisches Patentamt

European Patent Office

Office européen des brevets

(19)

(11) Veröffentlichungsnummer: **0 329 958 B1**

## (12) EUROPÄISCHE PATENTSCHRIFT

(45) Veröffentlichungstag der Patentschrift:
19.06.91 Patentblatt 91/25

(51) Int. Cl.$^5$: **C10G 7/08**

(21) Anmeldenummer: **89101156.1**

(22) Anmeldetag: **24.01.89**

(54) **Verfahren zur Herstellung eines zur Verwendung als Blendingkomponente für Vergaserkraftstoffe geeigneten Aromatenkonzentrates.**

(30) Priorität: **20.02.88 DE 3805383**

(43) Veröffentlichungstag der Anmeldung:
**30.08.89 Patentblatt 89/35**

(45) Bekanntmachung des Hinweises auf die Patenterteilung:
**19.06.91 Patentblatt 91/25**

(84) Benannte Vertragsstaaten:
**BE DE ES FR GB IT NL SE**

(56) Entgegenhaltungen:
**EP-A- 0 154 677**
**EP-A- 0 155 992**
**EP-A- 0 241 638**

(73) Patentinhaber: **Krupp Koppers GmbH**
**Altendorfer Strasse 120**
**W-4300 Essen 1 (DE)**

(72) Erfinder: **Emmrich, Gerd**
**Kamperfeld 21**
**W-4300 Essen 1 (DE)**
Erfinder: **Firnhaber, Bernhard, Dr.**
**Pelmanstrasse 40**
**W-4300 Essen 1 (DE)**
Erfinder: **Schulze, Martin**
**Krüdenscheider Weg 83**
**W-5620 Velbert 15 (DE)**

## Beschreibung

Verfahren zur Herstellung eines zur Verwendung als Blendingkomponente für Vergaserkraftstoffe geeigneten Aromatenkonzentrates.

Die Erfindung betrifft ein Verfahren zur Herstellung eines zur Verwendung als Blendingkomponente für Vergaserkraftstoffe geeigneten Aromatenkonzentrates aus Einsatzkohlenwasserstoffgemischen, deren Siedebereich im wesentlichen zwischen 40 und 170°C liegt und die neben Nichtaromaten mehrere Aromaten enthalten, wobei das Einsatzkohlenwasserstoffgemisch ohne vorherige Auftrennung in einzelne Fraktionen einer Extraktivdestillation unter Verwendung von N-substituierten Morpholinen, deren Substituenten nicht mehr als sieben C-Atome aufweisen, als selektivem Lösungsmittel unterworfen wird, und wobei die niedrig siedenden Nichtaromaten mit einem Siedebereich bis ca. 105°C praktisch vollständig und die höher siedenden Nichtaromaten mit einem Siedebereich zwischen ca. 105 und 160°C zum überwiegenden Teil als Raffinat über Kopf aus der Extraktivdestillationskolonne abdestilliert werden, während die Hauptmenge der Aromaten sowie die restlichen Nichtaromaten zusammen mit dem verwendeten Lösungsmittel als Extrakt aus dem Sumpf der Extraktivdestillationskolonne abgezogen werden, worauf die Kohlenwasserstoffe des Extraktes in einer nachgeschalteten Abtreiberkolonne destillativ vom Lösungsmittel abgetrennt und ganz oder teilweise als Blendingkomponente eingesetzt werden, während das Lösungsmittel zur Abtreiberkolonne zurückgeführt wird.

Aus der DE-OS 36 12 384 ist ein Verfahren der gattungsgemäßen Art bekannt. Bei diesem Verfahren werden als Einsatzkohlenwasserstoffgemische aromatenhaltige Kohlenwasserstoffgemische verwendet. Besonders geeignet sind hierbei Reformate und Platformate aus der Erdölverarbeitung mit nicht zu hohem Benzolgehalt. Es können aber auch Gemische derartiger Reformate und Platformate mit Pyrolysebenzinen eingesetzt werden.

Zwar liegt bei diesen Einsatzprodukten das Siedeende normalerweise bei 170°C. In der Praxis hat sich jedoch gezeigt, daß dieses Siedeende in vielen Fällen nicht eingehalten wird, da es in den vorgeschalteten Produktionsprozessen zur Bildung von Kondensations- und Polymerisationsprodukten kommt, die einen höheren Siedepunkt als 170°C aufweisen, und die die Reformate und Platformate entsprechend verunreinigen. So weist beispielsweise ein typisches Reformat aus der Erdölverarbeitung einen Anteil an höhersiedenden Bestandteilen mit einem Siedepunkt von > 170°C in Höhe von etwa 3 Gew.-% auf. Die Zusammensetzung dieser höher siedenden Fraktion ist hierbei wie folgt :

| Verbindung: | Kp °C | Gew.-% |
|---|---|---|
| m-Cymol | 175 | 7,4 |
| Hemellitol | 176,1 | 14,3 |
| p-Cymol | 177,1 | 12,3 |
| N-Butylbenzol | 183 | 2,8 |
| Indan | 177,8 | 9,9 |
| 1.2.Diethylbenzol | 183,4 | 24,3 |
| Durol | 196,8 | 4,7 |
| I-Durol | 198 | 16,2 |
| Tetralin | 207,6 | 0,1 |
| Trimethylethylbenzol | 213 | 3,0 |
| Naphthalin | 218 | 4,0 |
| Methyltetralin | 229 | 0,1 |
| ß-Methylnaphthalin | 241 | 2,0 |
| α-Methylnaphthalin | 245 | 1,2 |
| Diphenyl | 255 | 0,8 |
| Dimethylnaphthalin | 268 | 0,9 |
| Summe | | 100,0 |

Da der Anteil dieser höhersiedenden Kondensations- und Polymerisationsprodukte, die nachfolgend zusammenfassend als Schweraromaten bezeichnet werden sollen, in den Reformaten und Platformaten in einzelnen Fällen wesentlich mehr als 3 Gew.-% betragen kann, können sie bei der Durchführung des Verfahrens nach der DE-OS 36 12 384 zu Schwierigkeiten führen.

In der Praxis hat sich nämlich gezeigt, daß sich diese Schweraromaten im selektiven Lösungsmittel anreichern. Dies führt mit fortschreitender Betriebszeit zu einer immer stärkeren Verunreinigung des im Kreislauf geführten Lösungsmittels, so daß dessen Selektivität ständig verringert und der Trenneffekt in der Extraktivdestillation entsprechend herabgesetzt wird. Versuche, die Schweraromaten durch Destillation vom Lösungsmittel abzutrennen, haben auch bei Anwendung eines hohen Destillationsaufwandes zu keinem befriedigenden Ergebnis geführt, da ein Teil der Schweraromaten im gleichen Temperaturbereich siedet wie das Lösungsmittel. Da somit eine destillative Trennung praktisch unmöglich ist, konnte diese Problem bisher nur in der Weise gelöst werden, daß nach einer gewissen Betriebszeit ein vollständiger Austausch des verunreinigten Lösungsmittels vorgenommen wurde. Es liegt auf der Hand, daß dieses Verfahren äußerst kostspielig und damit unwirtschaftlich ist. Außerdem verursacht die Vernichtung des verunreinigten Lösungsmittels zusätzliche Kosten, da dieses keiner anderweitigen Verwendung bzw. Verwertung mehr zugeführt werden kann.

Der Erfindung liegt deshalb die Aufgabe zugrunde, das Verfahren der gattungsgemäßen Art dahingehend zu verbessern, daß die vorstehend geschilderten Schwierigkeiten vermieden werden.

Diese Aufgabe wird erfindungsgemäß dadurch gelöst, daß ein Teilstrom des aus der Abtreiberkolonne abgezogenen Lösungsmittels bis auf eine Temperatur zwischen 40 und 80°C abgekühlt und daran anschließend mit Wasser in einer Menge von 5 bis 20 Volumenteilen pro 100 Volumenteile Lösungsmittel versetzt wird, worauf dieses Gemisch in einen Phasenscheider eingeleitet wird, in dem die im Lösungsmittel enthaltenen Schweraromaten als leichte Phase vom Lösungsmittel-Wassergemisch abgetrennt werden und daran anschließend das aus dem Phasenscheider abgezogene Lösungsmittel-Wassergemisch in seine Bestandteile zerlegt wird und diese im Verfahren wiederverwendet werden.

Das erfindungsgemäße Verfahren basiert dabei auf der Erkenntnis, daß die Schweraromaten und das Lösngsmittel, insbesondere das in der Praxis vorzugsweise verwendete N-Formylmorpholin, unterschiedliche Lösungseigenschaften im Wasser aufweisen. Während das Lösungsmittel, insbesondere N-Formylmorpholin, in Wasser unbegrenzt löslich ist, lösen sich die Schweraromaten nur in sehr geringen Mengen in Wasser. Da die Schweraromaten außerdem einen deutlichen Dichteunterschied gegenüber dem Lösungsmittel-Wassergemisch aufweisen (0,86 kg/l gegenüber ca. 1,05 kg/l bei Verwendung von N-Formylmorpholin) lassen sie sich in einem Phasenscheider ohne Schwierigkeiten als leichte Phase vom Lösungsmittel-Wassergemisch abtrennen. Das Lösungsmittel-Wassergemisch wird dabei als schwere Phase aus dem Phasenscheider abgezogen. Es darf jedoch nicht ohne weiteres in den Lösungsmittelkreislauf der Extraktivdestillation zurückgeführt werden, da sonst die Gefahr einer hydrolytischen Zersetzung des Lösungsmittels besteht. Es ist deshalb zunächt erforderlich, das Lösungsmittel-Wassergemisch in seine Bestandteile zu zerlegen, bevor diese im Verfahren wiederverwendet werden können.

Für diese Zerlegung sind erfindungsgemäß zwei Verfahrensvarianten vorgesehen :

Bei der ersten Verfahrensvariante wird das Lösungsmittel-Wassergemisch in den Sumpf der Kolonne eingeleitet, die der Lösungsmittelrückgewinnung aus dem Raffinat dient. Zusammen mit den Kohlenwasserstoffen des Raffinates (Nichtaromaten) wird dabei das Wasser azeotrop über Kopf aus der Kolonne abdestilliert und kondensiert zusammen mit den Kohlenwasserstoffen des Raffinates, von denen es sich im sogenannten Rückflußbehälter durch Phasenscheidung abtrennen läßt. Anschließend kann das Wasser zur Wiederverwendung in das Verfahren zurückgeführt werden. Das vom Wasser befreite Lösungsmittel verbleibt im Sumpf der Kolonne und wird über eine Trennflasche ausgeschleust und in das Verfahren zurückgeführt. Etwa mitgerissene Kohlenwasserstoffe des Raffinates werden dabei in der Trennflasche abgetrennt und in die Kolonne zurückgeführt. Diese azeotrope Wasserabtrennung bietet den Vorteil, daß aus dem Sumpf der Kolonne nahezu alles Wasser abdestilliert wird, da die Kohlenwasserstoffe des Raffinates (Nichtaromaten) in hohem Überschuß vorhanden sind. Wenn überhaupt, dann werden lediglich nur noch Spuren von Wasser in den Lösungsmittelkreislauf geschleppt. Deren Konzentration ist jedoch keinesfalls größer als die Wassermenge, die auch normalerweise im Einsatzkohlenwasserstoffgemisch enthalten sein kann. Daher ist die Gefahr einer Hydrolyse des Lösungsmittels durch eingeschlepptes Wasser nicht zu befürchten.

Bei der zweiten Verfahrensvariante erfolgt die Trennung des Lösungsmittel-Wassergemisches in der Lösungsmittelregenerationskolonne. Hierbei wird dem Lösungsmittel-Wassergemisch vor dem Eintritt in diese Kolonne Toluol und/oder Xylol zugesetzt. Das Wasser wird dann in der Kolonne azeotrop it dem zugesetzten Toluol und/oder Xylol abdestilliert und in einer nachgeschalteten Trenneinrichtung durch Phasenscheidung von diesen Aromaten abgetrennt. Um das Wasser weitgehend lösungsmittelfrei zu halten, muß auf die Kolonne Rücklauf aufgegeben werden.

Weitere Einzelheiten des erfindungsgemäßen Verfahrens ergeben sich aus den vorliegenden Unteransprüchen und sollen nachfolgend an Hand der in den Abbildungen dargestellten Fließschemata erläutert werden. Hierbei zeigen :

Fig. 1 ein Fließschema für das Verfahren, bei dem die Zerlegung des Lösungsmittel-Wassergemisches in der Kolonne erfolgt, die der Lösungsmittelrückgewinnung aus dem Raffinat dient (1. Verfahrensvariante) und

Fig. 2 ein Fließschema für das Verfahren, bei dem die Zerlegung des Lösungsmittel-Wassergemisches in der Lösungsmittelregenerationskolonne erfolgt (2. Verfahrensvariante).

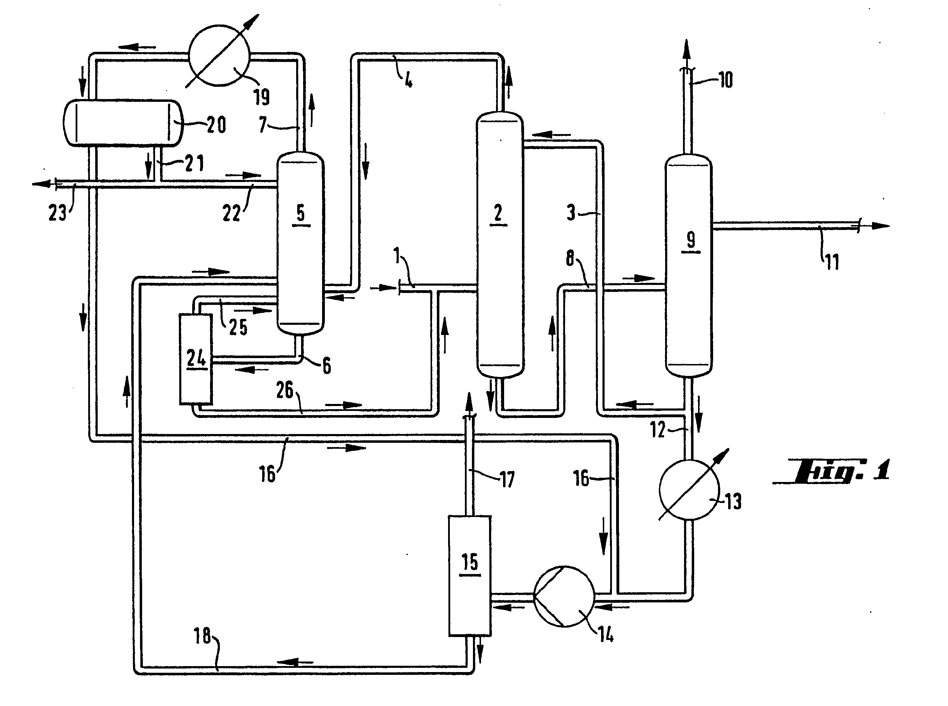

Bei dem in Fig. 1 dargestellten Fließschema wird das zur Verarbeitung gelangende Einsatzkohlenwasserstoffgemisch ohne jede Vorfraktionierung über die Leitung 1 in den mittleren Teil der mit Einbauten (Böden) versehenen Extraktivdestillationskolonne 2 eingeleitet. Die Kohlenwasserstoffe des Raffinates entweichen dabei über Kopf aus der Extraktivdestillationskolonne 2 und gelangen über die Leitung 4 in die Kolonne 5, in der die Kohlenwasserstoffe des Raffinates destillativ von den Lösungsmittelresten abgetrennt werden. Letztere werden über die Leitung 6 abgezogen, während die vom Lösungsmittel befreiten Kohlenwasserstoffe des Raffinates über Kopf aus der Kolonne 5 entweichen und über die Leitung 7 abgezogen werden. Die Kohlenwasserstoffe des Extraktes werden zusammen mit der Hauptmenge der Lösungsmittel über die Leitung 8 aus dem Sumpf der Extraktivdestillationskolonne 2 abgezogen und von dort in den mittleren Teil der Abtreiberkolonne 9 eingeleitet, die gegebenenfalls auch mit Einbauten (Böden) versehen sein kann. In dieser Kolonne werden die hauptsächlich aus Aromaten bestehenden Kohlenwasserstoffe des Extraktes aus dem Lösungsmittel abgetrieben, wobei das wiedergewonnene Lösungsmittel, das sich im Sumpf der Abtreiberkolonne 9 anreichert, über die Leitung 3 zur Extraktivdestillationskolonne 2 zurückgeführt und dort am Kopf wieder eingeleitet wird. Die vom Lösungsmittel befreiten Kohlenwasserstoffe des Extraktes werden dagegen über die Leitungen 10 und 11 aus der Abtreiberkolonne 9 abgezogen und ihrer weiteren Verwendung zugeführt. Hierfür sind folgende Varianten möglich :

1. Die Betriebsbedingungen in der Extraktivdestillationskolonne 2 werden so eingestellt, daß sich das im Einsatzkohlenwasserstoffgemisch enthaltene Benzol weitgehend in dem Extrakt anreichert und ein benzolarmes Raffinat anfällt. In der Abtreiberkolonne 9 wird dann das im Extrakt enthaltene Benzol von den übrigen Aromaten destillativ abgetrennt und als verkaufsfähiges Reinbenzol mit einem Nichtaromatengehalt von < 1000 ppm als Kopfprodukt über die Leitung 10 abgezogen, während das als Blendingkomponente dienende Aromatenkonzentrat, welches in diesem Falle praktisch mehr oder weniger benzolfrei ist, als Seitenstrom über die Leitung 11 oder über eine an dieser Stelle angeordnete, im Fließschema nicht dargestellte Seitenkolonne aus der Abtreiberkolonne 9 entfernt wird.

2. In diesem Falle werden die Betriebsbedingungen der Extraktivdestillationskolonne 2 so eingestellt, daß ein Teil des im Einsatzkohlenwasserstoffgemisch enthaltenen Benzols mit ins Raffinat übergeht und im Aromatenkonzentrat des Extraktes nur noch ein Benzolgehalt verbleibt, der einen gewünschten, unter 5 Gew.-% liegenden Maximalwert nicht überschrietet. Bei der Aufarbeitung des Extraktes in der Abtreiberkolonne 9 wird hierbei das anfallende, als Blendingkomponente dienende Aromatenkonzentrat ausschließlich über die Leitung 10 abgezogen, während der Seitenabzug über die Leitung 11 außer Betrieb bleibt.

3. Wenn einerseits der Benzolgehalt im Einsatzkohlenwasserstoffgemisch relativ niedrig ist und andererseits die Anreicherung dieses Benzolgehaltes in dem als Blendingkomponente dienenden Aromatenkonzentrat nicht als störend angesehen wird, kann schließlich die Extraktivdestillationskolonne 2 unter solchen Betriebsbedingungen betrieben werden, daß das gesamte Benzol praktisch vollständig in den Extrakt übergeht. In Abweichung von der Verfahrensvariante 1 findet in diesem Falle jedoch in der Abtreiberkolonne 9 keine Abtrennung des Benzols von den übrigen Aromaten statt. Das heißt, in diesem Falle wird das Aromatenkonzentrat in seiner Gesamtheit über die Leitung 10 aus der Abtreiberkolonne 9 abgezogen und der Seitenabzug über die Leitung 11 bleibt außer Betrieb.

Um die eingangs beschriebene Anreicherung von Schweraromaten im Lösungsmittel zu vermeiden, ist erfindungsgemäß vorgesehen, daß von dem über die Leitung 3 zur Extraktivdestillationskolonne zurückgeführten Lösungsmittel ein Teilstrom abgezweigt wird. Dieser Teilstrom, der in der Größenordnung von 1 bis 5 Vol.-% der gesamten im Kreislauf geführten Lösungsmittelmenge liegt, gelangt über die Leitung 12 in den Lösungsmittelkühler 13 und von dort über die Mischpumpe 14 in den Phasenscheider 15. Über die Leitung 16 wird dem Lösungsmittelteilstrom vor der Mischpumpe 14 das für die Schweraromatenabtrennung erforderliche Wasser zugesetzt. Dieser Wasserzusatz liegt dabei in der Größenordnung von 5 bis 20 Volumenteilen pro 100 Volumenteile Lösungsmittel in der Leitung 12. Im Phasenscheider 15 werden die Schweraromaten als leichte Phase vom Lösungsmittel-Wassergemisch abgetrennt und über die Leitung 17 abgezogen, während das Lösungsmittel-Wassergemisch, das die schwere Phase bildet, über die Leitung 18 aus dem Phasenscheider 15 entfernt wird und in den Sumpf der Kolonne 5 gelangt. Hier wird das im Lösungsmittel-Wassergemisch enthaltene Wasser zusammen mit den Kohlenwasserstoffen des Raffinates über Kopf aus der Kolonne 5 azeotrop abdestilliert. Über die Leitung 7 gelangt dieses Kohlenwasserstoff-Wassergemisch in den Kühler 19 und daran anschliessend in den Rückflußbehälter 20, in dem das Wasser von den Kohlenwasserstoffen des Raffinates durch Phasenscheidung abgetrennt wird, während das Wasser über die Leitung 16 abgezogen und erneut dem Lösungsmittelteilstrom in der Leitung 12 zugesetzt wird, gelangen die Kohlenwasserstoffe des Raffinates zunächst in die Leitung 21. Von dort wird ein kleiner Teilstrom über die Leitung 22 abgezogen und als Rückfluß auf die Kolonne 5 aufgegeben, während die Hauptmenge über die Leitung 23 aus dem Verfahren entfernt und seiner weiteren Verwendung zugeführt wird. Das Lösungsmittel wird währenddessen über die Leitung 6 in die Trennflasche 24 eingeleitet, in der mitgerissene Kohlenwasserstoffe des Raffinates durch Phasenscheidung abgetrennt und von dort über die Leitung 25 in den Sumpf der Kolonne 5 zurückgeführt werden. Das von den Kohlenwasserstoffen befreite Lösungsmittel wird währenddessen über die Leitung 26 abgezogen und dem Einsatzkohlenwasserstoffgemisch in der Leitung 1 zugesetzt, mit dem es zusammen in die Extraktivdestillationskolonne 2 eingeleitet wird. Eine andere Möglichkeit besteht darin, dieses Lösungsmittel über die Leitung 26 dem Lösungsmittelkreislauf in der Leitung 3 wieder zuzusetzen.

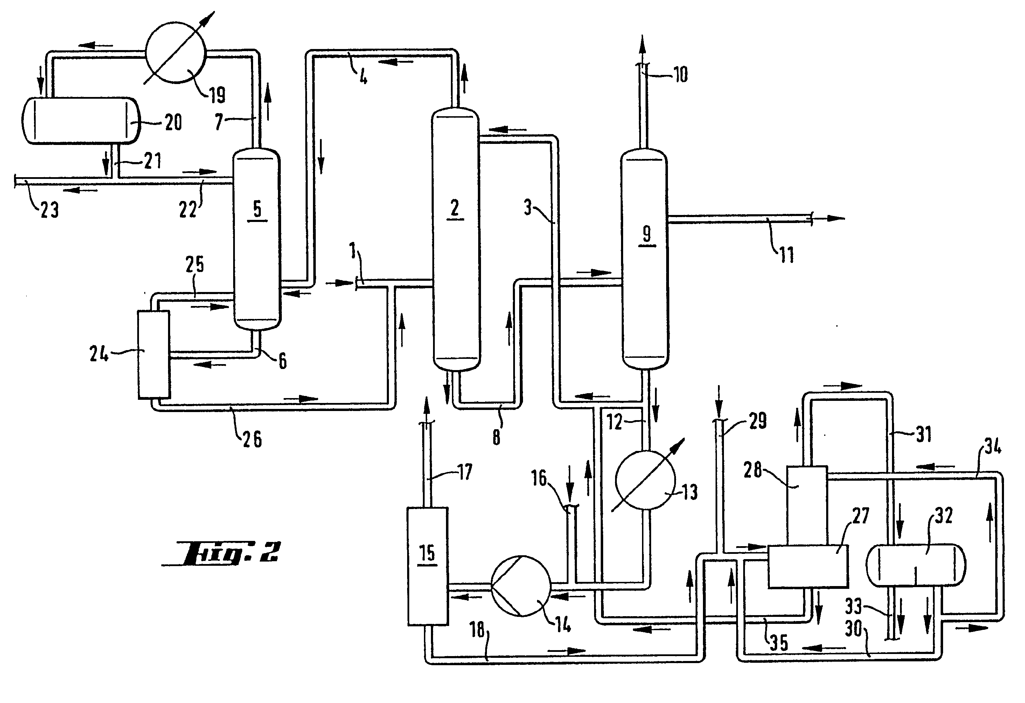

Das im Fließschema gemäß Fig. 2 dargestellte Verfahren entspricht im wesentlichen dem Verfahren gemäß Fig. 1, wobei übereinstimmende Bezugszeichen selbstverständlich die gleiche Bedeutung haben. Im Gegensatz zum Verfahren gemäß Fig. 1 wird hier jedoch das über die Leitung 18 aus dem Phasenscheider 15 abgezogene Lösungsmittel-Wassergemisch in die Lösungsmittelregenerationskolonne 27 eingeleitet, die einen verstärkten Destillationsteil 28 aufweist. Vor dem Eintritt in diese Kolonne wird dem Lösungsmittel-Wassergemisch über die Leitungen 29 und/oder 30 Toluol und/oder Xylol zugesetzt. Die zugesetzte Menge an Toluol und/oder Xylol liegt dabei entsprechend den Azeotropverhältnissen im Bereich zwischen 15 und 40 Volumenteilen pro 100 Volumenteile Wasser im Lösungsmittel-Wassergemisch. Das im Lösungsmittel-Wassergemisch enthaltene Wasser wird zusammen mit den zugesetzten Aromaten (Toluol und/oder Xylol) azeotrop aus der Lösungsmittelregenerationskolonne 27 abdestilliert und über die Leitung 31 abgezogen. Das wasserfreie Lösungsmittel wird aus dem Sumpf der Lösungsmittelregenerationskolonne 27 über die Leitung 35 in den Lösungsmittelkreislauf in der Leitung 3 zurückgeführt. Im Rückflußbehälter 32 wird das abgetriebene Wasser durch Phasenscheidung von den Aromaten abgetrennt und kann über die Leitung 33 abgezogen werden. Von dort gelangt das Wasser, was im Fließschema nicht dargestellt ist, zwecks Wiederverwendung in die Leitung 16. Die Aromaten werden über die Leitung 30 abgezogen und gelangen zur Leitung 18 zurück, wo sie dem Lösungsmittel-Wassergemisch erneut zugeführt werden. Über die Leitung 34 wird jener Teilstrom der Aromaten abgezogen, der als Rückfluß auf den verstärkten Destillationsteil 28 der Lösungsmittelregenerationskolonne 27 aufgegeben wird. Sofern die Menge der über die Leitung 30 zurückgeführten Aromaten nicht ausreicht, muß eine entsprechende Ergänzung über die Leitung 29 vorgenommen werden. Hierbei kann bei entsprechender Fahrweise der Extraktivdestillationskolonne 2 und der Abtreiberkolonne 9 ein Teilstrom der über die Leitung 11 abgezogenen Toluol-Xylol-Fraktion verwendet werden. Grundsätzlich ist zu sagen, daß für den genannten Zweck das Xylol dem Toluol vorzuziehen ist, da Xylol ca. 40 Gew.-% $H_2O$ im Azeotrop enthält, während es beim Toluol nur 13,5 Gew.-% $H_2O$ im Azeotrop sind. Benzol mit nur 9 Gew.-% $H_2O$ im Azeotrop scheidet dagegen ganz aus, weil hier somit die für die Wasserentfernung erforderlichen Benzolmengen zu groß wären.

Die in den Abbildungen dargestellten Fließschemata enthalten nur die für die Erläuterung des erfindungsgemäßen Verfahrens unbedingt notwendigen Anlagenteile, während alle Nebeneinrichtungen, die nicht unmittelbar im Zusammenhang mit der Erfindung stehen, nicht dargestellt wurden. Dies gilt insbesondere für die Wärmeaustauscher zum Wärmeaustausch zwischen den einzelnen Prozeßströmen, die Umlaufkocher zur Beheizung der einzelnen Kolonnen, die Einrichtungen zur Regenerierung bzw. Ergänzung des verbrauchten Lösungsmittels sowie sämtliche Meß- und Regeleinrichtungen.

Die Wirkungsweise des erfindungsgemäßen Verfahrens soll abschließend durch zwei Ausführungsbeispiele belegt werden. Diese Ausführungsbeispiele beziehen sich dabei nur auf die erfindungsgemäße Behandlung des Lösungsmittelteilstromes, während auf die vorgeschaltete Gewinnung des als Blendingkomponente geeigneten Aromatenkonzentrates, die ja nicht Gegenstand der vorliegenden Erfindung ist, nicht näher eingegangen wird. Beim Betrieb einer Anlage zur Gewinnung dieses Aromatenkonzentrates hat sich in der Praxis gezeigt, daß ein Schwераromatengehalt im Lösungsmittel in der Größenordnung von 5 Gew.-% die Selektivität des Lösungsmittels in keiner Weise beeinträchtigt. Erst bei einem Ansteigen des Schweraromatengehaltes auf $\geq$ 10 Gew.-% tritt eine deutliche Minderung der Selektivität des Lösungsmittels auf. Daraus folgt, daß in der Praxis das Lösungsmittel in der Anlage solange im Kreislauf geführt werden kann, bis ein Schweraromatengehalt von 10 Gew.-% erreicht ist. Erst dann muß ein Teilstrom des Lösungsmittels zwecks Schweraromatenabtrennung abgezogen und erfindungsgemäß behandelt werden. Aus dem weiter oben genannten Grunde genügt es dabei, wenn in diesem Teilstrom der Schweraromatengehalt auf einen Wert von 5 Gew.-% abgesenkt wird. Das Beispiel 1 betrifft hierbei die 1. Verfahrensvariante und das Beispiel 2 die 2. Verfahrensvariante.

Beispiel 1 :

| Leitung 12 : | 90 kg N-Formylmorpholin |
| | 10 kg Schweraromaten |
| Leitung 16 : | 15 kg Wasser |
| Leitung 17 : | 5 kg Schweraromaten |
| Leitung 18 : | 90 kg N-Formylmorpholin |
| | 15 kg Wasser |
| | 5 kg Schweraromaten |
| Leitung 7 : | Nichtaromaten des Raffinates |
| | 15 kg Wasser |
| Leitung 26 : | 90 kg N-Formylmorpholin |
| | 5 kg Schweraromaten |

Beispiel 2 :

| Leitung 12 : | 90 kg N-Formylmorpholin |
| | 10 kg Schweraromaten |
| Leitung 16 : | 15 kg Wasser |
| Leitung 17 : | 5 kg Schweraromaten |
| Leitung 18 : | 90 kg N-Formylmorpholin |
| | 15 kg Wasser |
| | 5kg Schweraromaten |
| Leitung 29 und 30 : | insgesamt 5 kg Toluol-Xylol-Gemisch |
| Leitung 35 : | 90 kg N-Formylmorpholin |
| | 5 kg Schweraromaten |
| Leitung 31 : | 5 kg Toluol-Xylol-Gemisch |
| | 15 kg Wasser |

## Ansprüche

1. Verfahren zur Herstellung eines zur Verwendung als Blendingkomponente für Vergaserkraftstoffe geeigneten Aromatenkonzentrates aus Einsatzkohlenwasserstoffgemischen, deren Siedebereich im wesentlichen zwischen 40 und 170°C liegt und die neben Nichtaromaten mehrere Aromaten enthalten, wobei das Einsatzkohlenwasserstoffgemisch ohne vorherige Auftrennung in einzelne Fraktionen einer Extraktivdestillation unter Verwendung von N-substituierten Morpholinen, deren Substituenten nicht mehr als sieben C-Atome aufweisen, als selektivem Lösungsmittel unterworfen wird, und wobei die niedrig siedenden Nichtaromaten mit einem Siedebereich bis ca. 105°C praktisch vollständig und die höher siedenden Nichtaromaten mit einem Siedebereich zwischen ca. 105 und 160°C zum überwiegenden Teil als Raffinat über Kopf aus der Extraktivdestillationskolonne abgezogen werden, worauf die Kohlenwasserstoffe des Extraktes in einer nachgeschalteten Abtreiberkolonne destillativ vom Lösungsmittel abgetrennt und ganz oder teilweise als Blendingkomponente eingesetzt werden, während das Lösungsmittel zur Extraktivdestillationskolonne zurückgeführt wird, dadurch gekennzeichnet, daß ein Teilstrom des aus der Abtreiberkolonne abgezogenen Lösungsmittels bis auf eine Temperatur zwischen 40 und 80°C abgekühlt und daran anschließend mit Wasser in einer Menge von 5 bis 20 Volumenteilen pro 100 Volumenteile Lösungsmittel versetzt wird, worauf dieses Gemisch in einen Phasenscheider eingeleitet wird, in dem die im Lösungsmittel enthaltenen Schweraromaten als leichte Phase vom Lösungsmittel-Wassergemisch abgetrennt werden und daran anschließend das aus dem Phasenscheider abgezogene Lösungsmittel-Wassergemisch in seine Bestandteile zerlegt wird und diese im Verfahren wiederverwendet werden.

2. Verfahren nach Anspruch 1, dadurch gekennzeichnet, daß der der Schweraromatenabtrennung unterworfene Teilstrom des Lösungsmittels in der Größenordnung von 1 bis 5 Vol.-% der gesamten im Kreislauf geführten Lösungsmittelmenge liegt.

3. Verfahren nach den Ansprüchen 1 und 2, dadurch gekennzeichnet, daß als Lösungsmittel vorzugsweise N-Formylmorpholin verwendet wird.

4. Verfahren nach den Ansprüchen 1 bis 3, dadurch gekennzeichnet, daß das aus dem Phasenscheider abgezogene Lösungsmittel-Wassergemisch in den Sumpf der Kolonne eingeleitet wird, die der Lösungsmittelrückgewinnung aus dem Raffinat dient, wobei das Wasser zusammen mit den Kohlenwasserstoffen des Raffinates über Kopf abdestilliert und daran anschließend durch Phasenscheidung von diesen Kohlenwasserstoffen abgetrennt wird, während das wasserfreie Lösungsmittel aus dem Sumpf dieser Kolonne abgezogen wird.

5. Verfahren nach den Ansprüchen 1 bis 3, dadurch gekennzeichnet, daß das aus dem Phasenscheider abgezogene Lösungsmittel-Wassergemisch entsprechend den Azeotropverhältnissen mit Toluol und/oder Xylol in einer Menge von 15 bis 40 Volumenteilen pro 100 Volumenteile Wasser versetzt wird, worauf dieses Gemisch in die Lösungsmittelregenerationskolonne eingeleitet und dort das Wasser mit den zugesetzten Aromaten azeotrop abdestilliert und anschließend durch Phasenscheidung von den Aromaten abgetrennt wird, während das wasserfreie Lösungsmittel aus dem Sumpf dieser Kolonne abgezogen wird.

6. Verfahren nach den Ansprüchen 1 bis 5, dadurch gekennzeichnet, daß das vom Wasser befreite Lösungsmittel entweder dem Einsatzkohlenwasserstoffgemisch vor dem Eintritt in die Extraktivdestillationskolonne zugesetzt oder in den Lösungsmittelkreislauf zurückgeführt wird.

## Claims

1. Process for the manufacture of an aromatics concentrate suitable for use as a blending component for carburettor fuels from feed hydrocarbon mixtures, whose boiling range is essentially between 40 and 170°C and which contain several aromatics in addition to non-aromatics, the feed hydrocarbon mixture being subjected, without previous separation into individual fractions, to an extractive distillation using N-substituted morpholines, whose substituents contain not more than seven C atoms, as the selective solvent, and virtually all the low-boiling non-aromatics having a boiling range of up to about 105°C and the predominant part of the higher-boiling non-aromatics having a boiling range between about 105 and 160°C being taken off as raffinate over the top of the extractive distillation column, whereupon the hydrocarbons of the extract are separated from the solvent by distillation in a downstream stripping column and are used wholly or partially as a blending component, while the solvent is recycled to the extractive distillation column, characterised in that a part stream of the solvent taken off from the stripping column is cooled down to a temperature between 40 and 80°C and water is then added in a quantity from 5 to 20 parts by volume per 100 parts by volume of solvent, whereupon this mixture is introduced into a phase separator, where the heavy aromatics contained in the solvent are separated as the light phase from the solvent/water mixture and, subsequently thereto, the solvent/water mixture taken off from the phase separator is separated into its constituents and these are re-used in the process.

2. Process according to Claim 1, characterised in that the part stream, subjected to the separation of heavy aromatics, of the solvent is of the order of magnitude of 1 to 5% by volume of the total solvent rate circulated.

3. Process according to Claims 1 and 2, characterised in that N-formylmorpholine is preferably used as the solvent.

4. Process according to Claims 1 to 3, characterised in that the solvent/water mixture taken off from the phase separator is fed to the bottom of the column which serves for solvent recovery from the raffinate, the water distilling off over the top together with the raffinate hydrocarbons and then being separated from these hydrocarbons by phase separation, while the anhydrous solvent is taken off from the bottom of this column.

5. Process according to Claims 1 to 3, characterised in that toluene and/or xylene in a quantity of 15 to 40 parts by volume per 100 parts by volume of water, corresponding to the azeotrope compositions, is added to the solvent/water mixture taken off from the phase separator, whereupon this mixture is fed to the solvent regeneration column and the water is azeotropically distilled off therein together with the added aromatics and subsequently separated from the aromatics by phase separation, while the anhydrous solvent is taken off from the bottom of this column.

6. Process according to Claims 1 to 5, characterised in that the solvent freed of water is either added to the feed hydrocarbon mixture before entry to the extractive distillation column or is recycled to the solvent circulation.

## Revendications

1. Procédé pour fabriquer un concentré de produits aromatiques qui convient à une utilisation comme composante de mélange pour des carburants d'automobile à partir de mélanges d'hydrocarbures de mise en oeuvre dont la plage d'ébullition se situe essentiellement entre 40 et 170°C et qui contiennent, outre des dérivés non-aromatiques, plusieurs produits aromatiques, tandis que le mélange d'hydrocarbures de mise en oeuvre est soumis, sans séparation préalable en différentes fractions, à une distillation extractive moyennant l'utilisation, en tant que solvant sélectif, de morpholines N-substituées dont les substituants ne présentent pas plus de sept atomes de carbone, et tandis que les composés non-aromatiques à bas point d'ébullition, d'une plage d'ébullition allant jusqu'à 105°C environ, sont soutirés pratiquement en totalité et que les composés non-aromatiques à point d'ébullition plus élevé, d'une plage d'ébullition comprise entre 105 et 160°C environ, le sont en majeure partie à la tête de la colonne de distillation extractive à l'état de produit raffiné, à la suite de quoi les hydrocarbures de l'extrait sont séparés du solvant par distillation dans une colonne de rectification installée en aval et mis en oeuvre en tout ou partie comme composante de mélange, tandis que le solvant est renvoyé à la colonne de rectification,

caractérisé par le fait qu'un courant partiel du solvant soutiré de la colonne de rectification est refroidi jusqu'à une température comprise entre 40 et 80°C, puis mélangé à de l'eau dans des proportions de 5 à 20 parties en volume d'eau pour 100 parties en volume de solvant, à la suite de quoi ce mélange est transféré dans un dispositif séparateur des phases dans lequel les produits aromatiques lourds contenus dans le solvant forment une phase légère qui, surnageant sur le mélange de solvant et d'eau, est séparée et qu'ensuite le mélange d'eau et de solvant soutiré du dispositif séparateur des phases est décomposé en ses fractions constitutives et que ces dernières sont réutilisées dans le procédé.

2. Procédé suivant la revendication 1, caractérisé par le fait que la partie du flux de solvant qui est soumise à la séparation des composés aromatiques lourds se situe dans un ordre de grandeur de 1 à 5% en volume de la quantité totale du solvant circulant en circuit fermé.

3. Procédé suivant les revendications 1 et 2, caractérisé par le fait que le solvant utilisé de préférence est de la N-formyl-morpholine.

4. Procédé suivant les revendications 1 à 3, caractérisé par le fait que le mélange solvant-eau soutiré du dispositif séparateur des phases est introduit dans le pied de la colonne servant à la récupération du solvant dans le produit raffiné, tandis que l'eau est éliminée par distillation à la tête de la colonne ensemble avec les hydrocarbures du produit raffiné, puis séparée ensuite desdits hydrocarbures par séparation des phases, tandis que le solvant anhydre est soutiré du pied de ladite colonne.

5. Procédé suivant les revendications 1 à 3, caractérisé par le fait que le mélange solvant-eau soutiré du dispositif séparateur des phases est mélangé en concordance avec les proportions du mélange azéotrope avec du toluène et/ou du xylène dans des quantités de 15 à 40 parties en volume pour 100 parties en volume d'eau, puis que ce mélange est introduit dans la colonne de régénération du solvant où l'eau est chassée avec les composés aromatiques en une distillation azéotrope et ensuite séparée des composés aromatiques par séparation des phases, tandis que le solvant libéré de son eau est soutiré du bassin à la base de ladite colonne.

6. Procédé suivant les revendications 1 à 5, caractérisé par le fait que le solvant libéré de l'eau est renvoyé soit dans le mélange des hydrocarbures de mise en oeuvre avant leur admission dans la colonne de distillation extractive, soit dans le circuit du solvant.

Fig. 1

EP 0 329 958 B1

Fig. 2